# EUROPEAN PATENT APPLICATION

(11) **EP 1 275 292 A1**
(43) Date of publication of application: **15.01.2003**
(21) Application number: 02077265.3
(22) Date of filing: 10.06.2002
(51) Int. Cl.: A01D 67/00, A01B 63/32

(54) **An agricultural implement**

(30) Priority: 13.07.2001 NL 1018532
(71) Applicant: Lely Enterprises AG, 6300 ZUG (CH)
(72) Inventor: van den Engel, Alfonsus Jacobus, 3123 CM Schiedam (NL)
(74) Representative: Corten, Maurice Jean F.M.

(57) **Abstract**

The invention relates to an agricultural implement (1), preferably a drawn hay-making machine, provided with a first frame (4) which can be coupled with a vehicle, such as e.g. a tractor (3), and which comprises first supporting means (5) with the aid of which at least in the operative position of the agricultural implement (1) the first frame (4) bears on the ground. The agricultural implement (1) is further provided with a second frame (11) which comprises at least one agricultural working member (15), such as e.g. a tedder rotor, as well as second supporting means (14) with the aid of which the second frame (11) bears on the ground in the operative position, the first and the second frame (4; 11) being hingeably interconnected by means of a first pivotal axis (12) over at least a certain angle, and the working member (15) enclosing a certain angle α (19) with the horizontal in the operative position. According to the invention the supporting point or the supporting surface where the first supporting means (5) bear on the ground in the operative position viewed in the normal direction of travel of the agricultural implement (1) during operation, is located behind the first pivotal axis (12).

## Description

The invention relates to an agricultural implement, preferably a drawn hay-making machine, provided with a first frame which can be coupled with a vehicle, such as e.g. a tractor, and which comprises first supporting means with the aid of which at least in the operative position of the agricultural implement the first frame bears on the ground, which agricultural implement is further provided with a second frame which comprises at least one agricultural working member, such as e.g. a tedder rotor, as well as second supporting means with the aid of which the second frame bears on the ground at least in the operative position, the first and the second frame being hingeably interconnected by means of a first pivotal axis over at least a certain angle, and the working member enclosing a certain angle α with the horizontal in the operative position.

Such an agricultural implement is known from Dutch patent 1006999.

The invention aims at altering the adjusted angle α relative to the ground to a minimal extent or not at all when the agricultural machine is moved over uneven ground.

According to the invention this is achieved in that the supporting point or the supporting surface, where the first supporting means bear on the ground in the operative position viewed in the normal direction of travel of the agricultural implement during operation, is located behind the first pivotal axis. Due to the fact that the supporting point or the supporting surface is located behind the first pivotal axis, it is realised that, when the supporting means pass over a bump or through a hole, the first pivotal axis moves in height to a less extent than when the supporting point or the supporting surface, viewed in the direction of travel of the agricultural implement, would be located in front of or in the same plane as the first pivotal axis. This has the advantage that the working member follows the uneven ground because the orientation of the working member relative to the ground hardly changes, if at all. According to a further inventive feature the supporting point or the supporting surface of the first supporting means is located between the first pivotal axis and the supporting point or the supporting surface of the second supporting means. According to another inventive feature the agricultural implement comprises distance adjusting means with the aid of which the distance between the first pivotal axis and the supporting point or the supporting surface of the first supporting means is adjustable. In this manner there can be realised a suitable adjustment for any terrain. In a preferred embodiment of the invention the distance adjusting means comprise an element, such as e.g. a spindle adjustment, with the aid of which the distance is continuously variable. According to again another inventive feature the first supporting means comprise at least one wheel and preferably two wheels. For the purpose of adjusting the angle α, the first frame comprises angle adjusting means with the aid of which the first pivotal axis is movable in height in such a manner that as a result thereof the angle α can be changed. In a preferred embodiment of the invention the angle adjusting means are constituted by the first supporting means which are adjustable in height relative to the ground.

The invention will now be explained in further detail with reference to the accompanying figures, in which:
Figure 1 shows a first embodiment of the implement according to the invention, and
Figure 2 shows a second embodiment of the implement according to the invention.

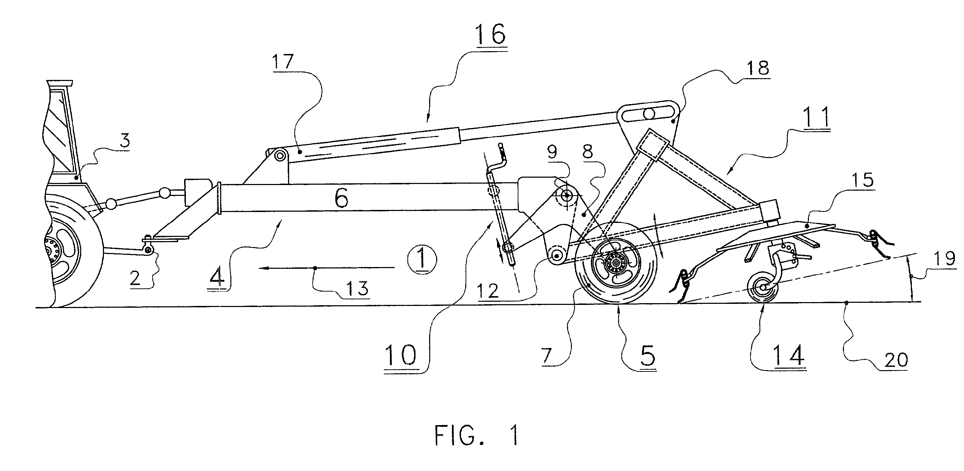

Figure 1 shows an agricultural implement 1 which is connected with a tractor 3 via coupling means 2. The agricultural implement 1 comprises a first frame 4 which is provided with first supporting means 5 with the aid of which the first frame 4 bears on the ground at least in the operative position of the agricultural implement 1. The first frame 4 comprises a drawbar 6 which is provided at its front side with the coupling means 2 and near its rear side with the first supporting means 5. In the present embodiment the first supporting means 5 comprise a wheel set 7 which is connected with the drawbar 6 so as to be hingeable about an axis 9 by means of a lever construction 8. Between the lever construction 8 and the drawbar 6 there is provided an adjusting element 10 with the aid of which the wheel set can be adjusted in height. In the present embodiment the adjusting element 10 is designed as a screw spindle. However, it will be obvious that instead of a screw spindle there may also be used other suitable adjusting elements, such as e.g. a hydraulic cylinder. The agricultural implement 1 is further provided with a second frame 11 which is hingeably connected with the first frame 4 via a first pivotal axis 12. In the present embodiment the first pivotal axis 12 is located in a plane which is perpendicular to the direction of travel 13 of the agricultural implement 1 during operation. The second frame 11 is further provided with second supporting means 14 with the aid of which the second frame 11 bears on the ground at least in the operative position. In the present embodiment the second supporting means 14 are designed as wheels. The second frame 11 is further provided with working members 15 which are designed in the present embodiment as tedder rotors of a hay-making machine. However, it will be obvious that the invention is not limited to a hay-making machine but that it is also possible to design any other machine in such a manner. Between the first and the second frame 4, 11 there are provided control means 16 with the aid of which the second frame 11 can be pivoted about the first pivotal axis 12 from the depicted operative position into a (non-shown) transport position and can be brought back into the operative position vice versa. The control means 16 comprise a control cylinder 17 one end of which is connected with the drawbar 6 and whose other end is connected with the second frame 11 via a slotted hole construction 18. The slotted hole construction 18 enables the second frame 11 to pivot freely about the first pivotal axis 12 during operation when the second supporting means 14 encounter irregularities in the soil.

As shown in Figure 1, the working member 15 encloses an angle α with the ground 20, which angle α is indicated by the reference numeral 19. If desired, the angle α can be changed by pivoting the screw spindle 10, which causes the wheel set 7 to rotate about the axis 9 so that the drawbar 6 is moved in height and as a result thereof the second frame 11 pivots about the first axis 12. As shown in Figure 1, viewed in the direction of travel 13 of the machine, the first supporting means 5 are located behind the first pivotal axis 12.

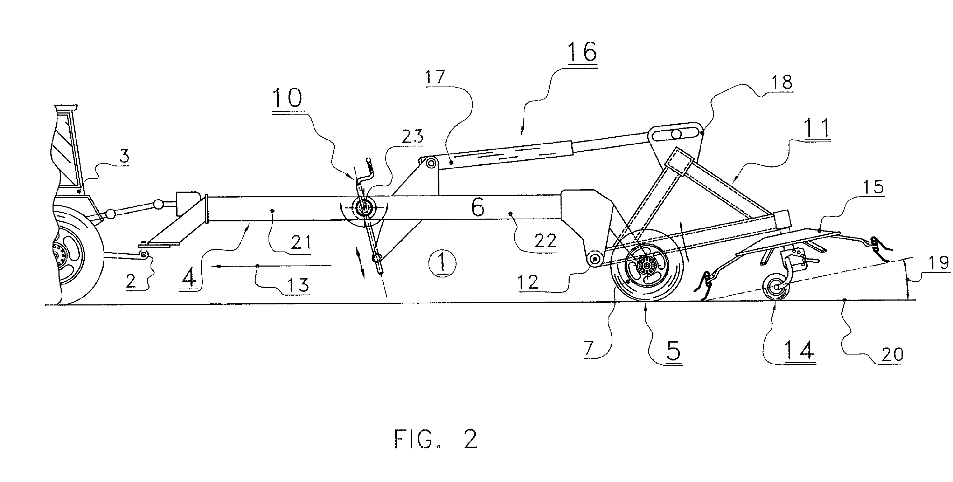

Figure 2 shows a second embodiment according to the invention, in which parts corresponding with those of the first embodiment are indicated by the same reference numerals. The second embodiment differs from the first embodiment in that the supporting means 14 are rigidly connected with the drawbar 6. Further the adjustment of the angle α (19) in this embodiment may be achieved by adjusting the adjusting element 10, which ensures that the parts of the drawbar 6, which consists of a first part 21 and a second part 22, pivot relative to each other about a pivotal axis 23. When the first part 21 and the second part 22 pivot relative to each other, the wheel 7, viewed in the direction of travel 13, is moved optionally forwards or rearwards so that the angle α (19) changes.

## Claims

1. An agricultural implement (1), preferably a drawn hay-making machine, provided with a first frame (4) which can be coupled with a vehicle, such as e.g. a tractor (3), and which comprises first supporting means (5) with the aid of which at least in the operative position of the agricultural implement (1) the first frame (4) bears on the ground, which agricultural implement (1) is further provided with a second frame (11) which comprises at least one agricultural working member (15), such as e.g. a tedder rotor, as well as second supporting means (14) with the aid of which the second frame (11) bears on the ground at least in the operative position, the first and the second frame (4; 11) being hingeably interconnected by means of a first pivotal axis (12) over at least a certain angle, and the working member (15) enclosing a certain angle α (19) with the horizontal in the operative position, **characterized in that** the supporting point or the supporting surface where the first supporting means (5) bear on the ground in the operative position viewed in the normal direction of travel of the agricultural implement (1) during operation, is located behind the first pivotal axis (12).

2. An agricultural implement as claimed in claim 1, **characterized in that** the supporting point or the supporting surface of the first supporting means (5) is located between the first pivotal axis (12) and the supporting point or the supporting surface of the second supporting means (14).

3. An agricultural implement as claimed in claim 1 or 2, **characterized in that** the agricultural implement (1) comprises distance adjusting means with the aid of which the distance between the first pivotal axis (12) and the supporting point or the supporting surface of the first supporting means is adjustable.

4. An agricultural implement as claimed in claim 3, **characterized in that** the distance adjusting means comprise an element, such as e.g. a spindle adjustment with the aid of which the distance is continuously variable.

5. An agricultural implement as claimed in any one of the preceding claims, **characterized in that** the first supporting means (5) comprise at least one wheel (7) and preferably two wheels (7).

6. An agricultural implement as claimed in any one of the preceding claims, **characterized in that** the first frame (4) comprises angle adjusting means (5; 10) with the aid of which the first pivotal axis (12) is movable in height in such a manner that as a result thereof the angle α (19) can be changed.

7. An agricultural implement as claimed in any one of the preceding claims, **characterized in that** the angle adjusting means (5; 10) are constituted by the first supporting means (5) which are adjustable in height relative to the ground.

8. An agricultural implement as claimed in any one of the preceding claims, **characterized in that** the angle adjusting means (5; 10) comprise a hingeable construction (23) dividing the first frame into two frame parts (21; 22) which are hingeable in height relative to each other.

9. An agricultural implement as claimed in any one of the preceding claims, **characterized in that** the angle adjusting means (5; 10) comprise an adjusting element (10) by means of which the angle α (19) is continuously variable.

10. An agricultural implement as claimed in any one of the preceding claims, **characterized in that** the adjusting element (10) comprises a spindle adjustment (10).
